# EUROPEAN PATENT APPLICATION

(11) **EP 4 503 702 A1**
(43) Date of publication of application: **05.02.2025**
(21) Application number: 23778153.9
(22) Date of filing: 28.03.2023
(51) Int. Cl.: H04W 24/02

(54) **CANDIDATE MEMBER DETERMINATION METHOD AND APPARATUS, AND DEVICE**

(30) Priority: 28.03.2022 CN 202210314821; 29.04.2022 CN 202210476433
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Conti, Marco
(86) International application number: PCT/CN2023/084244
(87) International publication number: WO 2023/185788

(57) **Abstract**

This application discloses a method and an apparatus for determining a candidate member, and a device, and pertains to the field of communication technologies. The method for determining a candidate member in embodiments of this application includes: receiving, by a first network element, a request message sent by a second network element, where the request message includes filter information; determining, by the first network element based on the filter information, one or more first devices as candidate member(s) able to participate in federated learning; and sending, by the first network element, a response message to the second network element, where the response message includes an identifier of the candidate member, and the filter information includes at least one of the following: a time window, an algorithm type, an accuracy threshold, a wireless access type, a signal quality requirement, a traffic range, member type information, quantity information, area information, and federated learning type information.

## Description

### CROSS-REFERENCE TO RELATED APPLICATIONS

This application claims priority to Chinese Patent Application No. 202210314821.7, filed on March 28, 2022 and entitled "METHOD AND APPARATUS FOR DETERMINING MEMBER TO PARTICIPATE IN FEDERATED LEARNING, AND DEVICE", and Chinese Patent Application No. 202210476433.9, filed on April 29, 2022 and entitled "METHOD AND APPARATUS FOR DETERMINING CANDIDATE MEMBER, AND DEVICE", which are incorporated herein by reference in their entireties.

### TECHNICAL FIELD

This application pertains to the field of communication technologies, and specifically, relates to a method and an apparatus for determining a candidate member, and a device.

### BACKGROUND

Federated learning (federated learning) is a method for machine learning modeling by combining different participants (participant, or party, also referred to as a data owner (data owner) or a client (client)). In federated learning, a participant does not need to expose its own data to other participants or a coordinator (coordinator, also referred to as a server (server), a parameter server (parameter server), or an aggregation server (aggregation server)). Therefore, federated learning can well protect user privacy and ensure data security, and can resolve a data silo problem.

After federated learning is applied to the communication field, how to select some suitable members for federated learning to improve training efficiency is an urgent problem to be resolved currently.

### SUMMARY

Embodiments of this application provide a method and an apparatus for determining a candidate member, and a device, to resolve a problem that training efficiency of federated learning is low because a participating member of the federated learning does not meet a requirement.

According to a first aspect, a method for determining a candidate member is provided, including:
receiving, by a first network element, a request message sent by a second network element, where the request message includes filter information;
determining, by the first network element based on the filter information, one or more first devices as candidate member(s) able to participate in federated learning; and
sending, by the first network element, a response message to the second network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

According to a second aspect, a method for determining a candidate member is provided, including:
sending, by a second network element, a request message to a first network element, where the request message includes filter information, and the request message is used to indicate the first network element to determine, based on the filter information, one or more first devices as candidate member(s) able to participate in federated learning; and
receiving, by the second network element, a response message sent by the first network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

According to a third aspect, an apparatus for determining a candidate member is provided, including:
a receiving module, configured to receive a request message sent by a second network element, where the request message includes filter information;
a processing module, configured to determine, based on the filter information, one or more first devices as candidate member(s) able to participate in federated learning; and
a sending module, configured to send a response message to the second network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

According to a fourth aspect, an apparatus for determining a candidate member is provided, including:
a sending module, configured to send a request message to a first network element, where the request message includes filter information, and the request message is used to indicate the first network element to determine, based on the filter information, one or more first devices as candidate member(s) able to participate in federated learning; and
a receiving module, configured to receive a response message sent by the first network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

According to a fifth aspect, a first network element is provided, where the first network element includes a processor, a memory, and a program or instructions stored in the memory and capable of running on the processor, and when the program or instructions are executed by the processor, the steps of the method according to the first aspect are implemented.

According to a sixth aspect, a first network element is provided, including a processor and a communication interface. The processor is configured to determine, based on filter information, one or more first devices as candidate member(s) able to participate in federated learning. The communication interface is configured to receive a request message sent by a second network element, and send a response message to the second network element, where the response message includes an identifier of the candidate member, the request message includes the filter information, and the filter information includes at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

According to a seventh aspect, a second network element is provided, where the network element includes a processor, a memory, and a program or instructions stored in the memory and capable of running on the processor, and when the program or instructions are executed by the processor, the steps of the method according to the second aspect are implemented.

According to an eighth aspect, a second network element is provided, including a processor and a communication interface. The communication interface is configured to: send a request message to a first network element, where the request message includes filter information, and the request message is used to indicate the first network element to determine, based on the filter information, one or more first devices as candidate member(s) able to participate in federated learning; and receive a response message sent by the first network element, where the response message includes an identifier of the candidate member, where
the filter information includes at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

According to a ninth aspect, a system for determining a candidate member is provided, including a first network element and a second network element, where the first network element may be configured to perform the steps of the method for determining a candidate member according to the first aspect, and the second network element may be configured to perform the steps of the method for determining a candidate member according to the second aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions, to implement the method according to the first aspect, or implement the method according to the second aspect.

According to a twelfth aspect, a computer program or program product is provided, where the computer program or program product is stored in a storage medium, and the computer program or program product is executed by at least one processor to implement the steps of the method for determining a candidate member according to the first aspect or the second aspect.

In the embodiments of this application, a first network element receives a request message sent by a second network element, determines, based on filter information included in the request message, one or more first devices as candidate member(s) able to participate in federated learning, and sends identification information of the candidate member to the second network element, where the filter information includes at least one of the following: a time window, an algorithm type, an accuracy threshold, a wireless access type, a signal quality requirement, a traffic range, member type information, quantity information, an area of interest AOI, and a federated learning type. The first network element can screen out, based on the filter information, a participating member suitable for federated learning, so as to improve training efficiency of federated learning.

### BRIEF DESCRIPTION OF DRAWINGS

FIG. 1 is a block diagram of a wireless communication system to which embodiments of this application are applicable;
FIG. 2 is a schematic flowchart of a method for determining a candidate member according to this application;
FIG. 3 is a schematic flowchart of another method for determining a candidate member according to this application;
FIG. 4 is a signaling diagram of a method for determining a candidate member according to this application;
FIG. 5 is a first schematic structural diagram of an apparatus for determining a candidate member according to this application;
FIG. 6 is a second schematic structural diagram of an apparatus for determining a candidate member according to this application;
FIG. 7 is a schematic structural diagram of a communication device according to an embodiment of this application;
FIG. 8 is a schematic diagram of a hardware structure of a first network element according to an embodiment of this application; and
FIG. 9 is a schematic diagram of a hardware structure of a second network element according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in this specification and the claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communication system.

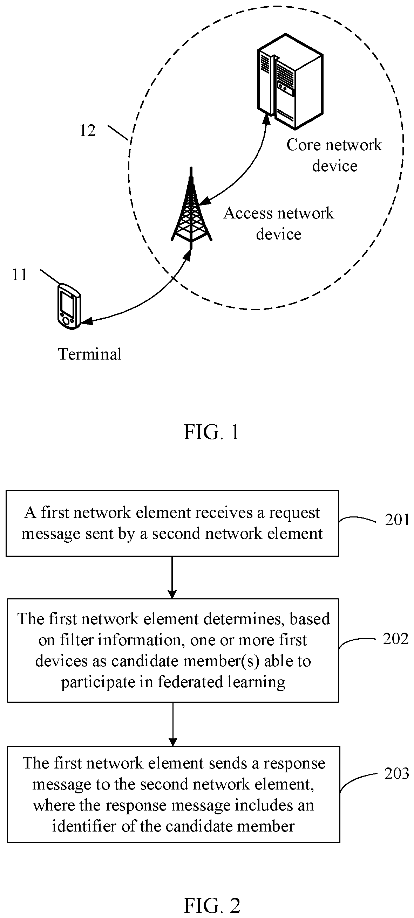

FIG. 1 is a block diagram of a wireless communication system to which embodiments of this application are applicable. The wireless communication system includes a terminal 11 and a network-side device 12. In this application, the terminal 11 may also be referred to as user equipment (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effects are achieved, the base station is not limited to a specific technical term. It should be noted that the base station in the NR system is used only as an example for description in the embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in the embodiments of this application, but a specific type of the core network device is not limited.

The following describes in detail a method for determining a candidate member provided in the embodiments of this application using some embodiments and application scenarios thereof with reference to the accompanying drawings.

Federated learning includes horizontal federated learning and vertical federated learning. The essence of the horizontal federated learning is the joint use of samples, and the horizontal federated learning is applicable to a scenario in which participants have a same business form but have different customer reaches, in other words, features greatly overlap, and samples slightly overlap, for example, same services (for example, a mobility management (mobility management, MM) or session management (session management, SM) service, or a specific service) that are in a core network (core network, CN) domain and a radio access network (Radio Access Network, RAN) domain in a communication network and that serve different users (for example, each terminal, namely, different samples). In horizontal federation, same data features of different samples from participants are jointly used to increase the number of training samples and obtain a better model.

The essence of the vertical federated learning is the joint use of features, and the vertical federated learning is applicable to a scenario in which samples greatly overlap, and features slightly overlap, for example, different services (for example, MM and SM services, namely, different features) that are in a CN domain and a RAN domain in a communication network and that serve a same user (for example, a terminal, namely, a same sample). In vertical federation, different data features of common samples from participants are jointly used to increase the number of training samples and obtain a better model.

A federated learning system includes a manager (server) and a plurality of participants. The manager is configured to send a model to various participants, update the model based on feedback results from the participants, and send an updated model to the participants for a next round of model training. Each participant has its own data. To avoid sending local data to others, each participant locally trains the model sent by the manager, and then returns a trained model to the manager for model update.

For example, a model training process may include the following steps:
Step 1: Each participant downloads a latest model from the manager (server).
Step 2: Each participant trains the model using local data, encrypts a gradient, and uploads an encrypted gradient to the manager (server), and the manager (server) aggregates gradients from all participants to update model parameters.
Step 3: The manager (server) returns an updated model to each participant.
Step 4: Each participant updates its own model.

In step 2 to step 4, a plurality of iterations or model updates are performed, and model training is completed under a specific condition (for example, a specific number of iterations are completed, or a calculated value of a loss function of a model is less than a preset value).

In 5GS, a network data analytics function (network data analytic function, NWDAF) is introduced. The NWDAF may collect data from various network elements of a core network, a network management system, or the like for big data statistics and analytics or intelligent data analytics, to obtain analytics or prediction data of the network side, thereby assisting network elements in more effective control of terminal access based on data analytics results.

In the method for determining a candidate member in this application, data from other network elements may be collected by the NWDAF, and these data is analyzed, so that a participating member suitable for federated learning can be screened out based on filter information and data analytics results, thereby improving the efficiency of federated learning.

It should be noted that the "determining a candidate member" in this application may be understood as "determining a candidate member able to participate in federated learning".

FIG. 2 is a schematic flowchart of a method for determining a candidate member according to this application. The method for determining a candidate member in an embodiment of this application is described below with reference to FIG. 2. As shown in FIG. 2, the method includes the following steps:
Step 201: A first network element receives a request message sent by a second network element.

The method for determining a candidate member in this embodiment of this application is performed by the first network element, and the first network element may be implemented in various forms. For example, the first network element described in this embodiment of this application may include an NWDAF, or certainly may be another network element capable of collecting data from network elements of a core network, a network management system, or the like for big data statistics and analytics or intelligent data analytics. The second network element may include a task consumer network element, for example, may be a network element or a device such as an application function (application function, AF) network element, a base station, or a terminal, or may be a third-party server.

The request message includes filter information, and the filter information includes at least one of the following: a time window, an algorithm type, an accuracy threshold, a wireless access type, a signal quality requirement, a traffic range, member type information, quantity information, area information, and federated learning type information. A more suitable participating member can be screened out based on filter information of different dimensions, thereby improving the efficiency of federated learning.

The time window is used to indicate a time window available for the federated learning. The time window may be a specific time window in a past time window or a future time window. It can be understood that if the time window is a future time window, the first network element predicts a networking status of each member within the future time window based on obtained historical data. The networking status includes a network-connected state and a network-disconnected state. It should be understood that the time window is usually flexibly set based on an actual time window within which federated learning is performed.

The algorithm type is used to indicate a model training algorithm type that needs to be supported for the federated learning, and includes algorithm types that are related to artificial intelligence (artificial intelligence, AI) data analytics tasks such as machine learning and that are supported by members, for example, a "deep learning algorithm" and a "linear regression algorithm". It should be understood that usually, based on a function of a model, a member that supports an algorithm type matching the function is usually selected as a participating member of federated learning.

The accuracy threshold is used to indicate a model training accuracy requirement that needs to be met for the federated learning, and includes an accuracy value that can be achieved by a model generated through training by each member, for example, an accuracy rate of the model, which may also be understood as a percentage of correct predictions or judgments made by the model. It should be understood that some members with high accuracy are usually selected as participating members of federated learning so as to ensure accuracy of the federated learning.

The wireless access type is used to indicate a wireless access type that needs to be selected for the federated learning, and includes a mode of connecting to or accessing a communication network by each member, for example, connecting to a non-3GPP WLAN (similar to connecting to Wi-Fi), or connecting to a 3GPP 5G or 4G network or the like. It should be understood that some members connected to a WLAN or Wi-Fi are usually selected as participating members of federated learning so as to ensure stability of the federated learning and reduce traffic consumption.

The signal quality requirement is used to indicate a requirement for wireless signal quality during the federated learning. The signal quality requirement may include a network signal strength threshold, a stability threshold, and/or the like when each member connects to a communication network. The signal quality requirement includes a WLAN network signal quality requirement, a 5G NR network signal quality requirement, or a 4G long term evolution (Long Term Evolution, LTE) network signal quality requirement. The signal quality requirement may also be understood as a minimum requirement for a proportion of time in which signal strength is kept above a specific value. For example, the signal strength can reach a threshold requirement in at least 90% of time. It should be understood that some members with high signal quality (for example, high network signal strength and good stability) are usually selected as participating members of federated learning so as to ensure stability of the federated learning.

In a case that a WLAN is connected, signal quality may be represented by a mean, a variance, or the like of a received signal strength indicator (Received Signal Strength Indication, RSSI) or a round-trip time (round-trip time, RTT) of a signal.

The traffic range is used to indicate a requirement for a traffic usage range of the candidate member, and is a requirement for a value of traffic consumed by each member within a preset time window, for example, information such as an amount of upload traffic and an amount of download traffic, for example, may be accumulated usage of UE. It should be understood that some members with stable networking statuses and less traffic consumption are usually selected as participants of federated learning so as to reduce pressure of participating members during the federated learning.

The member type information is used to indicate a requirement for a type of the candidate member participating in the federated learning. The member type information may be understood as a type of the candidate member participating in the federated learning this time, for example, may be a terminal, a core-network network element (for example, an NWDAF), or a base station.

The area of interest (area of interest, AOI) is used to indicate an area in which the candidate member is located. The AOI may be an area in which the candidate member participating in the federated learning is located, or a range of an area of concern or interest of the candidate member, and may be a latitude and a longitude, one or more cells/tracking areas (tracking area, TA), or the like.

The quantity information is used to indicate a requirement for a quantity of candidate members. The quantity information may be understood as the quantity of members participating in the federated learning, to be specific, the quantity of candidate members that the first network element needs to determine. The first network element may determine candidate network elements corresponding to the quantity. The quantity information may be a minimum quantity of candidate members required. To be specific, the quantity of determined candidate members cannot be less than the minimum quantity of candidate members required. The quantity information may alternatively be a maximum quantity of candidate members required. To be specific, the quantity of determined candidate members cannot be higher than the maximum quantity of candidate members required.

The federated learning type information is used to indicate whether the federated learning is vertical federated learning or horizontal federated learning. Optionally, the request message may further include indication information, and the indication information is used to indicate to perform a task of determining a candidate member to participate in federated learning, to be specific, whether a current task is intended for federated learning or selecting a member for federated learning. After receiving the request message, the first network element can learn, based on the request message or the indication information in the request message, a to-be-performed task of determining a candidate member to participate in federated learning.

Step 202: The first network element determines, based on the filter information, one or more first devices as candidate member(s) able to participate in federated learning.

In this step, after receiving the request message, the first network element screens from a plurality of second devices based on the filter information in the request message to determine one or more first devices that meet the filter information, and determines these first devices as candidate members able to participate in federated learning.

Optionally, the first device includes at least one of the following: a first device in a network-connected state within the time window; a first device supporting federated learning within the time window; a first device supporting the algorithm type; a first device supporting federated learning using the algorithm type; a first device with model training accuracy information higher than the accuracy threshold; a first device supporting the wireless access type; a first device in the wireless access type; a first device supporting federated learning in the wireless access type; a first device with signal quality higher than a signal quality threshold; a first device with signal quality higher than a signal quality threshold requirement; a first device whose consumed traffic is within the traffic range; a first device meeting the requirement for a type of a candidate member; a first device located within the AOI; and a first device whose federated learning type is the same as the federated learning type included in the filter information.

In a case that the filter information includes a time window, the first device is a first device in a network-connected state within the time window, or the first device is a first device supporting federated learning within the time window. In a case that the filter information includes an algorithm type, the first device is a first device supporting the algorithm type, or the first device is a first device supporting federated learning using the algorithm type. In a case that the filter information includes an accuracy threshold, the first device is a first device with model training accuracy information higher than the accuracy threshold. In a case that the filter information includes a wireless access type, the first device is a first device supporting the wireless access type, or the first device is a first device in the wireless access type, or the first device is a first device supporting federated learning in the wireless access type. In a case that the filter information includes a signal quality threshold, the first device is a first device with signal quality higher than the signal quality threshold. In a case that the filter information includes a signal quality requirement, the first device is a first device with signal quality higher than the signal quality requirement. In a case that the filter information includes a traffic range, the first device is a first device whose consumed traffic is within the traffic range. In a case that the filter information includes member type information, the first device is a first device meeting the requirement for a type of a candidate member. It can be understood that a type of the first device is the same as the member type information indicated in the filter information. In a case that the filter information includes an AOI, the first device is a first device located in the AOI. In a case that the filter information includes federated learning type information, a federated learning type of the first device is the same as the federated learning type information included in the filter information.

In addition, in a case that the filter information includes a device type, the first device is a first device of the device type; and in a case that the filter information includes area information, the first device is a first device in the area information.

It should be understood that, in a case that the filter information includes at least two pieces of information, the first device is a device correspondingly meeting the at least two pieces of filter information. For example, in a case that the filter information includes a time window and a supported algorithm type, the first device is a first device that is in a network-connected state within the time window and that supports the algorithm type. A case that the filter information includes at least two pieces of other information is similar to the case that the filter information includes the time window and the supported algorithm type. Details are not described herein again.

In the foregoing embodiment, a first device meeting the filter information may be screened out from at least one second device as a candidate network element based on the filter information, so that a member suitable for participating in the federated learning can be selected. This helps improve training efficiency of federated learning.

Optionally, when determining a candidate member, the first network element may determine a data type corresponding to the filter information, obtain, based on the data type, attribute information corresponding to each of at least one device from at least one third network element, and determine a candidate member based on the attribute information and the filter information.

Optionally, the data type includes at least one of the following: networking information and a corresponding time window, algorithm type, wireless access type, signal quality, and traffic.

Specifically, in a case that the filter information includes a time window, the data type corresponding to the filter information is networking information and a time window corresponding to a network-connected state; in a case that the filter information includes a supported algorithm type, the data type corresponding to the filter information is an algorithm type; in a case that the filter information includes an accuracy threshold, the data type corresponding to the filter information is accuracy information; in a case that the filter information includes a wireless access type, the data type corresponding to the filter information is a wireless access type; in a case that the filter information includes a signal quality threshold, the data type corresponding to the filter information is signal quality; in a case that the filter information includes a traffic range, the data type corresponding to the filter information is traffic; in a case that the filter information includes a member type, the data type corresponding to the filter information is a device type; and in a case that the filter information includes area information, the data type corresponding to the filter information is location information.

It can be understood that, in a case that the filter information includes a member type, the filter information included in the request message varies with different member types, in other words, the filter information is related to the member type. For example, if the member type includes a terminal, the filter information may include at least one of a time window, a supported algorithm type, an accuracy threshold, a wireless access type, a signal quality threshold, a traffic range, and area information; or if the member type includes a network-side device, for example, a base station or a core network device, the filter information may include at least one of a supported algorithm type and an accuracy threshold.

After determining the data type, the first network element obtains, based on the data type, attribute information corresponding to each of at least one second device from at least one third network element. The third network element includes a plurality of different network elements. It should be understood that, based on different attribute information that needs to be obtained, the first network element obtains attribute information from different third network elements. Examples are as follows: The first network element obtains information, such as time at which a terminal is connected to a WLAN or whether a terminal is connected to a WLAN, from a session management function (session management function, SMF), which is a third network element. The first network element obtains information such as signal quality of a connected WLAN from a third network element, where the third network element may be a network management device, for example, an operation, administration, and maintenance (operation administration and maintenance, OAM) function; obtains an algorithm and accuracy supported by each candidate network element from a unified data management (unified data management, UDM) function, which is a third network element, or from a data collection-application function (data collection-application function, DC-AF), which is a third network element; and obtains traffic information of a terminal from a user plane function (the user plane function, UPF), which is a third network element, or the first network element obtains UE accumulated usage information from the SMF or a charging function (Charging Function, CHF).

It can be understood that, in a case that the data type includes networking information and a corresponding time window, the attribute information is a current networking status corresponding to each of at least one device, and time at which the device is in a network-connected state, for example, whether the device is connected to a network and a time window within which the device is in the network-connected state. In a case that the data type includes an algorithm type, the attribute information is a currently supported algorithm corresponding to each of at least one device, for example, whether a deep learning algorithm is supported or whether a linear regression algorithm is supported. In a case that the data type includes accuracy information, the attribute information is currently supported accuracy corresponding to each of at least one device, for example, accuracy that can be achieved by a model obtained through training by each device. In a case that the data type includes a wireless access type, the attribute information is a type of a network standard currently accessed by at least one device, for example, a WLAN or a 5G network is currently accessed. In a case that the data type includes signal quality, the attribute information is signal quality of a network currently accessed by at least one second device, or signal quality of a network accessed within a preset time window. In a case that the data type includes traffic information, the attribute information is traffic correspondingly consumed by each of at least one second device within a preset time window. In a case that the data type includes a device type, the attribute information is a type corresponding to each of at least one second device, for example, a terminal, a base station, or a core network device. In a case that the data type includes location information, the attribute information is a location of each of at least one second device, for example, a current geographical location, or a cell or a TA in which the device is located.

After the attribute information is obtained, matching is performed between attribute information corresponding to each of at least one second device and the filter information to determine a candidate member based on the filter information. For example, a first device meeting the filter information may be determined as a candidate member.

For example, it is assumed that the filter information includes: a device type being a terminal; an area being a cell A; a time window A; and a wireless access type being connection to non-3GPP Wi-Fi. In this case, the first network element obtains corresponding attribute information based on the filter information, and selects, based on the obtained attribute information, a terminal that is located in the cell A, is in a network-connected state within the time window A, and is connected to non-3GPP Wi-Fi as a candidate member.

In this embodiment, the first network element obtains the data type corresponding to the filter information, and obtains attribute information of each second device from at least one third network element, to determine a candidate member based on the attribute information and the filter information. A candidate member suitable for participating in the federated learning can be determined from at least one second device based on the preset filter information, so that efficiency of federated learning can be improved.

In a possible implementation, the first network element may directly determine a device meeting the filter information as a candidate member, and supports all candidate network elements meeting the filter information participating in federated learning by default. The first network element may send identifiers of all candidate members meeting the filter information to the second network element.

In another possible implementation, to screen out a more suitable participant, the first network element may further perform filtering based on willingness information of each second device when determining a candidate member based on the attribute information and the filter information. For example, the first network element may obtain first indication information from the third network element, and determine one or more first devices from the second devices as candidate member(s) based on the filter information and the first indication information. The first indication information is used to indicate willingness information of each device to participate in the federated learning. The willingness information indicates whether each device is willing to participate in the federated learning.

The first device is a device that meets the filter information and that is willing to participate in the federated learning.

For example, each device corresponds to its own first indication information. For a specific device, in a case that first indication information corresponding to the device is 0, it indicates that the device is willing to participate in the federated learning; and in a case that the first indication information is 1, it indicates that the device is unwilling to participate in the federated learning. Alternatively, in a case that the first indication information is 1, it indicates that the device is willing to participate in the federated learning; and in a case that the first indication information is 0, it indicates that the device is unwilling to participate in the federated learning. Certainly, the first indication information may alternatively indicate, using other values, willingness information of each device to participate in the federated learning.

After obtaining the first indication information, the first network element performs matching between attribute information of each device and the filter information, and determines a device that meets the filter information and whose first indication information indicates that the device is willing to participate in the federated learning as a candidate member.

In this embodiment, the first network element screens out, based on the filter information and the first indication information, a device that meets the filter information and that is willing to participate in the federated learning as a candidate member. This helps improve efficiency of subsequent federated learning.

Optionally, when determining one or more first devices from the second devices as candidate member(s) based on the filter information and the first indication information, the first network element may also obtain capability information of each second device to participate in the federated learning from the third network element, to determine a candidate member based on the filter information, the first indication information, and the capability information.

The capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in.

The type of the federated learning to be participated in may include willingness to participate in horizontal federated learning or willingness to participate in vertical federated learning.

In an implementation, that the first network element determines, based on the filter information, one or more first devices as candidate member(s) able to participate in federated learning includes:
the first network element obtains, from a third network element, willingness information of the first device to participate in the federated learning; and
the first network element determines, based on the willingness information and the filter information, a first device that is willing to participate in the federated learning and that matches the filter information as a candidate member able to participate in the federated learning.

In an implementation, that the first network element determines, based on the filter information, one or more first devices as candidate member(s) able to participate in federated learning includes:
the first network element obtains federated learning capability information of the first device, where the capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and
the first network element determines, based on the capability information and the filter information, a candidate member able to participate in the federated learning from the first device, where capability information of the candidate member matches the filter information.

It should be noted that the first network element may obtain the federated learning capability information of the first device from a fourth network element, where the fourth network element may be at least one of the following: an NRF, a UDM, a data collection coordination function (Data Collection Coordination Function, DCCF), and an AMF.

That capability information of the candidate member matches the filter information includes at least one of the following:
a wireless access type used by the candidate member to participate in the federated learning is the same as the wireless access type included in the filter information;
an area in which the candidate member participates in the federated learning is located within the AOI included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information.

Optionally, the first network element may alternatively obtain capability information of each device to participate in the federated learning from the third network element, to perform matching between attribute information of each device and the filter information, and determine a device whose first indication information indicates that the device is willing to participate in the federated learning and whose capability information to participate in the federated learning meets the filter information as a candidate member. This improves efficiency of subsequent federated learning.

That capability information to participate in the federated learning meets the filter information includes:
a wireless standard used by the candidate member to participate in the federated learning is the same as the wireless access type included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information.

For example, if the filter information includes a supported algorithm type and the supported algorithm type is a deep learning algorithm, the first network element screens out, based on the first indication information, 80 devices willing to participate in the federated learning; and the first network element may perform further selection based on information, obtained from the third network element, about algorithms that can be supported by the 80 devices to participate in the federated learning. If the first network element learns that 50 devices can support both the deep learning algorithm and a linear regression algorithm when participating in the federated learning and 30 devices support only the deep learning algorithm when participating in the federated learning, the first network element may further screen out, based on an algorithm type supported for participating in the federated learning, a first device supporting both the deep learning algorithm and the linear regression algorithm as a candidate network element.

It should be understood that an implementation in a case that the capability information includes other information is similar to the implementation in the case that the capability information includes the algorithm type supported for participating in the federated learning. Details are not described herein again.

The first network element may obtain willingness information and capability information of each device to participate in the federated learning from third network elements: a UDM, a DCAF, and an NRF. The UDM, the DCAF, and the NRF are network elements with storage capabilities.

Optionally, the request message sent by the second network element further includes second indication information, and the second indication information is used to indicate a service type corresponding to the federated learning. When determining a candidate member, the first network element may determine one or more first devices from a plurality of second devices as candidate member(s) based on the filter information and the second indication information, where the first device is a device capable of supporting a service corresponding to the service type.

Specifically, the second indication information may be an analytic ID used to indicate a service type corresponding to the federated learning. In a data analytics task (to be specific, another task performed by an NWDAF), the analytic ID may be: "UE mobility", used to indicate that a current task is an analytics task related to UE mobility; or "NF load", used to indicate that a current task is an analytics task related to network element load.

Generally, a selected candidate member may vary with a service type corresponding to the federated learning. Therefore, when selecting a candidate member, the first network element may alternatively select, based on the filter information and the service type indicated by the analytic ID, a first device capable of supporting a service corresponding to the service type from a plurality of second devices as a candidate member. If the second indication information is used to indicate that the service type corresponding to the federated learning is an analytics task related to terminal mobility, the selected first device is a device capable of supporting an analytics task related to the terminal mobility.

In this embodiment, a candidate member is further screened out based on the service type corresponding to the federated learning, which increase accuracy of a selected candidate member, and improves training efficiency of the federated learning and accuracy of a trained model.

In an implementation, that the first network element determines, based on the filter information, one or more first devices as candidate member(s) able to participate in federated learning includes:
the first network element obtains network state information corresponding to the first device, where the network state information includes at least one of the following:
type information of the first device;
location information of the first device;
wireless access type information of the first device; and
wireless signal quality information of the first device; and
the first network element determines, based on the filter information and the network state information corresponding to the first device, a candidate member able to participate in the federated learning from the first device, where network state information corresponding to the candidate member matches the filter information.

It should be noted that the first network element may obtain the network state information corresponding to the first device from a third device, where the third device may be an AMF, a UDM, an NRF, a PCF, a RAN, or an operation, administration, and maintenance (OAM Operation Administration and Maintenance, OAM) device. For example, the first network element may obtain the type information of the first device from the UDM or the NRF, or the first network element may obtain the wireless access type information of the first device from the AMF or the PCF, or the first network element may obtain the wireless signal quality information of the first device from the RAN or the OAM, or the first network may obtain UE accumulated usage information from an SMF or a CHF.

That network state information corresponding to the candidate member matches the filter information includes at least one of the following:
a wireless access type of the candidate member is the same as the wireless access type included in the filter information;
wireless signal quality information of the candidate member is higher than the signal quality requirement included in the filter information;
a location of the candidate member is within the AOI included in the filter information; and
a type of the candidate member is included in the member type information included in the filter information.

Optionally, the request message further includes sorting indication information. The sorting indication information is used to indicate to sort candidate members based on second information. The second information includes at least one of the following: signal quality of the candidate member, accuracy information of the candidate member, and traffic information of the candidate member. In a case that the request message includes the sorting indication information, an order of identifiers of the candidate members in a response message is an order obtained through sorting based on the second information.

Specifically, in a case that the request message includes the sorting indication information, after determining candidate members, the first network element sorts the determined candidate members in ascending or descending order based on the second information in the sorting indication information. For example, the sorting may be performed in ascending or descending order of signal quality of the candidate members, or the sorting may be performed in ascending or descending order of accuracy information of the candidate members, or the sorting may be performed in ascending or descending order of traffic information of the candidate members.

When the first network element sends a response message to the second network element, an order of identifiers of candidate members in the response message is an order obtained through sorting based on the second information.

In this embodiment, the first network element sorts the determined candidate members based on the second information. In this way, after receiving identification information of the candidate members that is sent by the first network element, the second network element further screens out, based on the sorting information, a candidate member that better meets a requirement of the second network element to participate in subsequent federated learning, so as to improve efficiency of the federated learning.

The request message further includes grouping indication information. The grouping indication information is used to indicate to group the candidate members based on third information. The third information includes at least one of the following: an area in which the candidate member is located, a time window within which the candidate member is in a network-connected state, an algorithm type supported by the candidate member, accuracy information of the candidate member, a wireless access type of the candidate member, and signal quality of the candidate member. In a case that the request message includes the grouping indication information, identifiers of the candidate members in a response message are identifiers obtained through sorting based on the third information.

Specifically, in a case that the request message includes the grouping indication information, after determining candidate members, the first network element groups the determined candidate members based on the third information in the grouping indication information. For example, the grouping may be performed based on areas in which the candidate members are located. For example, candidate members located in a same area constitute a group. Alternatively, the grouping may be performed based on time windows within which the candidate members are in a network-connected state. For example, candidate members in a network-connected state within a same time window constitute a group. Alternatively, the grouping may be performed based on algorithm types supported by the candidate members. For example, network elements supporting a same algorithm type constitute a group. Alternatively, the grouping may be performed based on accuracy information of the candidate members. For example, candidate members with same accuracy information constitute a group. Alternatively, the grouping may be performed based on wireless access types of the candidate members. For example, candidate members in a same wireless access type constitute a group. Alternatively, the grouping may be performed based on signal quality of the candidate members. Alternatively, the grouping may be performed based on traffic information of the candidate members. Alternatively, the grouping may be performed based on time windows within which the candidate members are able to perform federated learning. For example, candidate members able to perform federated learning within a same time window, for example, 10:00 to 12:00 in the daytime, constitute a group.

When the first network element sends a response message to the second network element, identifiers of the candidate members in the response message are identifiers obtained through grouping based on the third information.

In this embodiment, the first network element groups the determined candidate members based on the third information. In this way, after receiving identification information of the candidate members that is sent by the first network element, the second network element further screens out, based on the grouping information, a candidate member that better meets a requirement of the second network element to participate in subsequent federated learning, to improve efficiency of the federated learning.

Step 203: The first network element sends a response message to the second network element, where the response message includes an identifier of the candidate member.

In this step, after determining the candidate member(s) able to participate in the federated learning, the first network element may add identifier(s) of the candidate member(s) to the response message and send the response message to the second network element. The identifier of the candidate member may include a subscriber permanent identifier (Subscriber Permanent Identifier, SUPI) or an Internet Protocol (Internet Protocol, IP) of the candidate member. The identifier of the candidate member may alternatively be a generic public subscription identifier (Generic Public Subscription Identifier, GPSI), an international mobile subscriber identity (International Mobile Subscriber Identity, IMSI), an AF-specific UE ID (AF specific UE ID), or a UE IP address.

Optionally, the response message further includes at least one of the following information: an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

The area in which the candidate member is located may include a location of the candidate member, for example, a latitude and a longitude, or a cell.

The time window within which the candidate member is able to perform federated learning is a prediction result obtained by the first network element through analytics based on willingness information and capability information of each device.

The signal quality of the candidate member may be represented by a mean or a variance of an RSSI or an RTT in a case that a WLAN is connected.

The traffic information of the candidate member may include a value of traffic consumed within a preset time window, for example, information such as an amount of upload traffic and an amount of download traffic.

Optionally, the response message may further include second indication information, and the second indication information may be an analytic ID used to indicate a service type corresponding to the federated learning.

Optionally, the response message may further include a proportion of coverage time within which the candidate member is in a network-connected state, for example, duration of a day within which the candidate member is connected to Wi-Fi.

Optionally, the response message may further include address information of the candidate member, and the second network element may find the candidate member based on the address information to perform connection and federated learning.

Optionally, the response message may further include quantity information, and the quantity information may be understood as a quantity of members participating in the federated learning, to be specific, a quantity of candidate members that the first network element needs to determine.

Further, after receiving the response message sent by the first network element, the second network element selects, based on an actual case of training for federated learning, a target member to really participate in the federated learning.

For example, the second network element may determine, based on the signal quality of the candidate member in the response message, a member to participate in the federated learning, and may select the first 100 members with best signal quality for the federated learning. Certainly, a manner of determining a target member based on other information in the response message is similar to the manner of determining a target member based on the signal quality. Details are not described herein again.

Optionally, in a case that the request message sent by the second network element to the first network element includes quantity information, if the response message returned by the first network element includes a target quantity of candidate members, the second network element may directly determine the target quantity of candidate members as target members. For example, if the request message includes a requirement for 50 members of federated learning and the response message returned by the first network element includes 50 candidate members, the second network element may directly select the 50 members as target members.

Further, after determining the target members, the second network element connects to these target members based on identification information of the target members to perform federated learning.

In this embodiment, the second network element may further screen out, based on a candidate member returned by the first network element, a target member to really participate in the federated learning. In this way, the screened-out target member is more suitable for participating in the federated learning, so that efficiency of the federated learning is improved.

In the method for determining a candidate member in this embodiment of this application, a request message sent by a second network element is received, one or more first devices are determined, based on filter information included in the request message, as candidate member(s) able to participate in federated learning, and identification information of the candidate member is sent to the second network element, where the filter information includes at least one of the following: a time window, an algorithm type, an accuracy threshold, a wireless access type, a signal quality requirement, a traffic range, member type information, quantity information, area information, and federated learning type information. A first network element can screen out, based on the filter information, a participating member suitable for federated learning, so as to improve efficiency of federated learning.

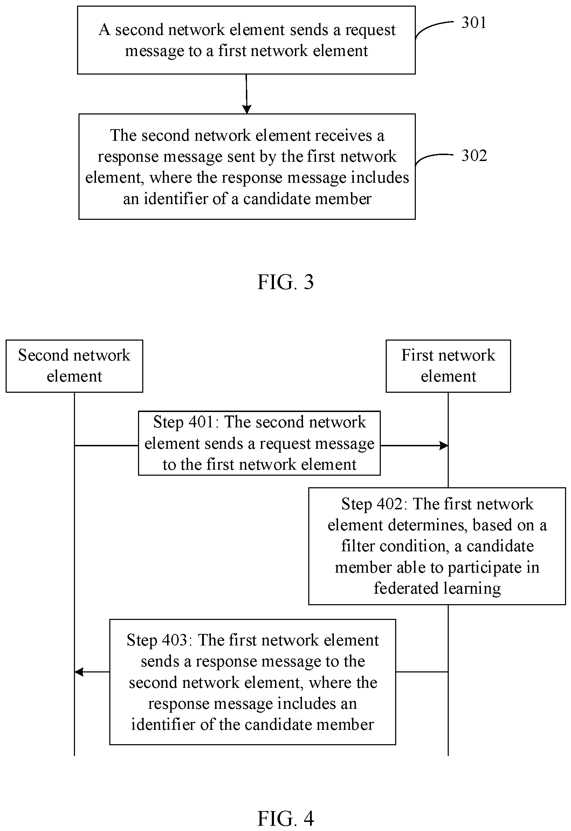

FIG. 3 is a schematic flowchart of another method for determining a candidate member according to this application. In this embodiment, an execution entity is a second network element. As shown in FIG. 3, the method includes the following steps:

Step 301: The second network element sends a request message to a first network element.

The request message includes filter information, and the request message is used to indicate the first network element to determine, based on the filter information, one or more first devices as candidate member(s) able to participate in federated learning.

The filter information includes at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

Step 302: The second network element receives a response message sent by the first network element, where the response message includes an identifier of the candidate member.

For specific implementation processes and beneficial effects in this embodiment of this application, refer to the content of the embodiment shown in FIG. 2. Details are not described herein again.

Optionally, the first device includes at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information included in the filter information.

Optionally, the request message further includes indication information, where the indication information is used to indicate to perform a task of determining a candidate member to participate in federated learning, or is used to indicate that a current task is intended for federated learning or selecting a member for federated learning.

Optionally, the request message further includes sorting indication information, where the sorting indication information is used to indicate to sort the candidate members based on second information, and the second information includes at least one of the following: signal quality of the candidate member, accuracy information of the candidate member, and traffic information of the candidate member; and
identifiers of candidate members in the response message are identifiers obtained through sorting based on the second information.

Optionally, the request message further includes grouping indication information, where the grouping indication information is used to indicate to group the candidate members based on third information, and the third information includes at least one of the following information: an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

Optionally, the response message further includes an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

Optionally, the method further includes:
The second network element determines, based on the identifier of the candidate member, a target member to participate in the federated learning.

In the method for determining a candidate member in this embodiment of this application, a request message sent by a second network element is received, one or more first devices are determined, based on filter information included in the request message, as candidate member(s) able to participate in federated learning, and identification information of the candidate member is sent to the second network element, where the filter information includes at least one of the following: a time window, an algorithm type, an accuracy threshold, a wireless access type, a signal quality requirement, a traffic range, member type information, quantity information, area information, and federated learning type information. A first network element can screen out, based on the filter information, a participating member suitable for federated learning, to improve efficiency of federated learning. In addition, the second network element may further select, based on a candidate member sent by the first network element, a member really suitable for participating in the federated learning, so that efficiency of the federated learning is improved.

Specific implementation processes and technical effects of the method in this embodiment are similar to those in the method embodiment on the first network element side. For details, refer to the detailed descriptions in the method embodiment on the first network element side. Details are not described herein again.

FIG. 4 is a signaling diagram of a method for determining a candidate member according to this application. As shown in FIG. 4, the method includes the following steps:

Step 401: A second network element sends a request message to a first network element.

The request message includes filter information, and the filter information includes at least one of the following: a time window, an algorithm type, an accuracy threshold, a wireless access type, a signal quality requirement, a traffic range, member type information, quantity information, area information, and federated learning type information.

Step 402: The first network element determines, based on the filter information, one or more first devices as candidate member(s) able to participate in federated learning.

Step 403: The first network element sends a response message to the second network element, where the response message includes an identifier of the candidate member.

In the method for determining a candidate member in this embodiment of this application, a request message sent by a second network element is received, one or more first devices are determined, based on filter information included in the request message, as candidate member(s) able to participate in federated learning, and identification information of the candidate member is sent to the second network element, where the filter information includes at least one of the following: a time window, an algorithm type, an accuracy threshold, a wireless access type, a signal quality requirement, a traffic range, member type information, quantity information, an area of interest AOI, and a federated learning type. The first network element can screen out, based on the filter information, a participating member suitable for federated learning, to improve training efficiency of federated learning.

Specific implementation processes and technical effects of the method in this embodiment are similar to those in the method embodiment on the first network element side. For details, refer to the detailed descriptions in the method embodiment on the first network element side. Details are not described herein again.

The method for determining a candidate member in the embodiments of this application may be performed by an apparatus for determining a candidate member. In the embodiments of this application, an apparatus for determining a candidate member in the embodiments of this application is described using an example in which the apparatus for determining a candidate member performs the method for determining a candidate member.

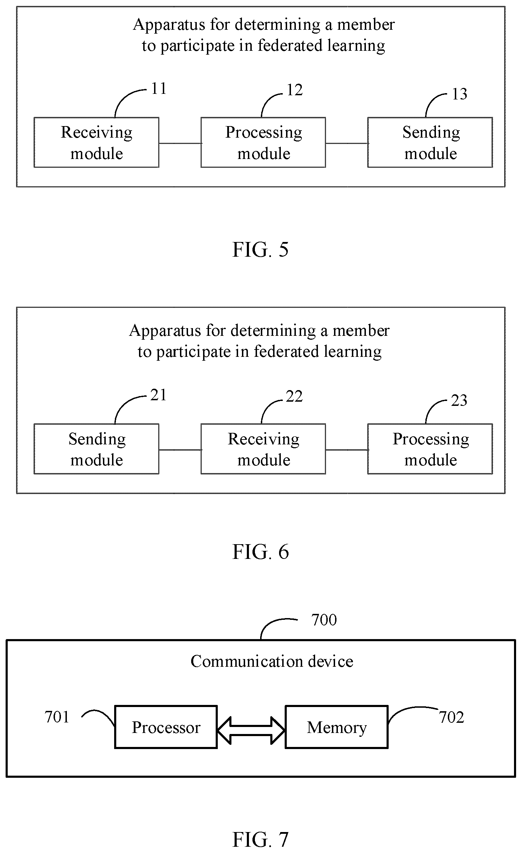

FIG. 5 is a first schematic structural diagram of an apparatus for determining a candidate member according to this application. As shown in FIG. 5, the apparatus for determining a candidate member in this embodiment includes:
a receiving module 11, configured to receive a request message sent by a second network element, where the request message includes filter information;
a processing module 12, configured to determine, based on the filter information, one or more first devices as candidate member(s) able to participate in federated learning; and
a sending module 13, configured to send a response message to the second network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

In the apparatus in this embodiment, the receiving module receives a request message sent by a second network element, where the request message includes filter information; the processing module determines, based on the filter information, one or more first devices as candidate member(s) able to participate in federated learning; and the sending module sends a response message to the second network element, where the response message includes an identifier of the candidate member, and the filter information includes at least one of the following: a time window, an algorithm type, an accuracy threshold, a wireless access type, a signal quality requirement, a traffic range, member type information, quantity information, an area of interest AOI, and a federated learning type. The apparatus for determining a candidate member can screen out, based on the filter information, a participating member suitable for federated learning, to improve training efficiency of federated learning.

Optionally, the first device includes at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information included in the filter information. Optionally, the processing module 12 is specifically configured to:
   determine a data type corresponding to the filter information;
   obtain, based on the data type, attribute information corresponding to each of at least one device from at least one third network element; and
   determine the candidate member based on the attribute information and the filter information.

Optionally, the data type includes at least one of the following:
networking information and a corresponding time window, algorithm type, accuracy information, wireless access type, signal quality, and traffic.

Optionally, the processing module 12 is specifically configured to:
obtain first indication information from a third network element, where the first indication information is used to indicate willingness information of second devices to participate in the federated learning, and the willingness information indicates whether the second devices are willing to participate in the federated learning; and
determine one or more first devices as the candidate member(s) based on the filter information and the first indication information, where the first device is a device among the second devices that is willing to participate in the federated learning and that meets the filter information.

Optionally, the processing module 12 is specifically configured to:
obtain, from a third network element, willingness information of the first device to participate in the federated learning; and
determine, based on the willingness information and the filter information, a first device that is willing to participate in the federated learning and that matches the filter information as a candidate member able to participate in the federated learning.

Optionally, the processing module 12 is specifically configured to:
obtain federated learning capability information of the first device, where the capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and
determine, based on the capability information and the filter information, a candidate member able to participate in the federated learning from the first device, where capability information of the candidate member matches the filter information.

That capability information of the candidate member matches the filter information includes at least one of the following:
a wireless access type used by the candidate member to participate in the federated learning is the same as the wireless access type included in the filter information;
an area in which the candidate member participates in the federated learning is located within the AOI included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information.

Optionally, the processing module 12 is specifically configured to:
obtain network state information corresponding to the first device, where the network state information includes at least one of the following:
type information of the first device;
location information of the first device;
wireless access type information of the first device; and
wireless signal quality information of the first device; and
determine, based on the filter information and the network state information corresponding to the first device, a candidate member able to participate in the federated learning from the first device, where network state information corresponding to the candidate member matches the filter information.

That network state information corresponding to the candidate member matches the filter information includes at least one of the following:
a wireless access type of the candidate member is the same as the wireless access type included in the filter information;
wireless signal quality information of the candidate member is higher than the signal quality requirement included in the filter information;
a location of the candidate member is within the AOI included in the filter information; and
a type of the candidate member is included in the member type information included in the filter information.

Optionally, the processing module is specifically configured to:
obtain capability information of the second devices to participate in the federated learning, where the capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and determine one or more first devices as the candidate member(s) based on the filter information, the first indication information, and the capability information, where the first device is a device among the second devices that is willing to participate in the federated learning and whose federated learning capability information meets the filter information.

That capability information to participate in the federated learning meets the filter information includes:
a wireless standard used by the candidate member to participate in the federated learning is the same as the wireless access type included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information. Optionally, the request message further includes second indication information, and the second indication information is used to indicate a service type corresponding to the federated learning; and
the processing module is specifically configured to:
   determine one or more first devices as the candidate member(s) based on the filter information and the second indication information, where
   the first device is a device capable of supporting a service corresponding to the service type.

Optionally, the request message further includes sorting indication information, where the sorting indication information is used to indicate to sort the candidate members based on second information, and the second information includes at least one of the following: signal quality of the candidate member, accuracy information of the candidate member, and traffic information of the candidate member; and
an order of identifiers of candidate members in the response message is an order obtained through sorting based on the second information.

Optionally, the request message further includes grouping indication information, where the grouping indication information is used to indicate to group the candidate members based on third information, and the third information includes at least one of the following information:
an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

Optionally, the response message further includes at least one of the following information: an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

The apparatus in this embodiment may be configured to perform the method in any one of the method embodiments on the first network element side. Specific implementation processes and technical effects of the apparatus are similar to those in the method embodiment on the first network element side. For details, refer to the detailed descriptions in the method embodiment on the first network element side. Details are not described herein again.

FIG. 6 is a second schematic structural diagram of an apparatus for determining a candidate member according to this application. As shown in FIG. 6, the apparatus for determining a candidate member in this embodiment includes:
a sending module 21, configured to send a request message to a first network element, where the request message includes filter information, and the request message is used to indicate the first network element to determine, based on the filter information, one or more first devices as candidate member(s) able to participate in federated learning; and
a receiving module 22, configured to receive a response message sent by the first network element, where the response message includes an identifier of the candidate member, where
the filter information includes at least one of the following:
   a time window for indicating a time window available for the federated learning;
   an algorithm type for indicating a model training algorithm type that needs to be supported for the federated learning;
   an accuracy threshold for indicating a model training accuracy requirement that needs to be met for the federated learning;
   a wireless access type for indicating a wireless access type that needs to be selected for the federated learning;
   a signal quality requirement for indicating a requirement for wireless signal quality during the federated learning;
   a traffic range for indicating a requirement for a traffic usage range of the candidate member;
   member type information for indicating a requirement for a type of the candidate member participating in the federated learning;
   quantity information for indicating a requirement for the number of candidate members;
   an area of interest AOI for indicating an area in which the candidate member is located; and
   federated learning type information for indicating whether the federated learning is vertical federated learning or horizontal federated learning.

Optionally, the first device includes at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information included in the filter information. Optionally, the request message further includes indication information, where the indication information is used to indicate to perform a task of determining a candidate member to participate in federated learning, or is used to indicate that a current task is intended for federated learning or selecting a member for federated learning.

Optionally, the request message further includes sorting indication information, where the sorting indication information is used to indicate to sort the candidate members based on second information, and the second information includes at least one of the following: signal quality of the candidate member, accuracy information of the candidate member, and traffic information of the candidate member; and
identifiers of candidate members in the response message are identifiers obtained through sorting based on the second information.

Optionally, the request message further includes grouping indication information, where the grouping indication information is used to indicate to group the candidate members based on third information, and the third information includes at least one of the following information: an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

Optionally, the response message further includes an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

Optionally, the apparatus further includes a processing module 23.

The processing module 23 is configured to determine, based on the identifier of the candidate member, a target member to participate in the federated learning.

The apparatus in this embodiment may be configured to perform the method in any one of the method embodiments on the second network element side. Specific implementation processes and technical effects of the apparatus are similar to those in the method embodiment on the second network element side. For details, refer to the detailed descriptions in the method embodiment on the second network element side. Details are not described herein again.

The apparatus for determining a candidate member in this embodiment of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in embodiments of this application.

The apparatus for determining a candidate member in this embodiment of this application is capable of implementing the processes implemented in the method embodiments of FIG. 2 to FIG. 4, with the same technical effects achieved. To avoid repetition, details are not described herein again.

Optionally, as shown in FIG. 7, an embodiment of this application further provides a communication device 700, including a processor 701 and a memory 702. The memory 702 stores a program or instructions capable of running on the processor 701. For example, in a case that the communication device 700 is a terminal, when the program or instructions are executed by the processor 701, the steps in the embodiments of the method for determining a candidate member are implemented, with the same technical effects achieved. In a case that the communication device 700 is a network-side device, when the program or instructions are executed by the processor 701, the steps in the embodiments of the method for determining a candidate member are implemented, with the same technical effects achieved. To avoid repetition, details are not described herein again.

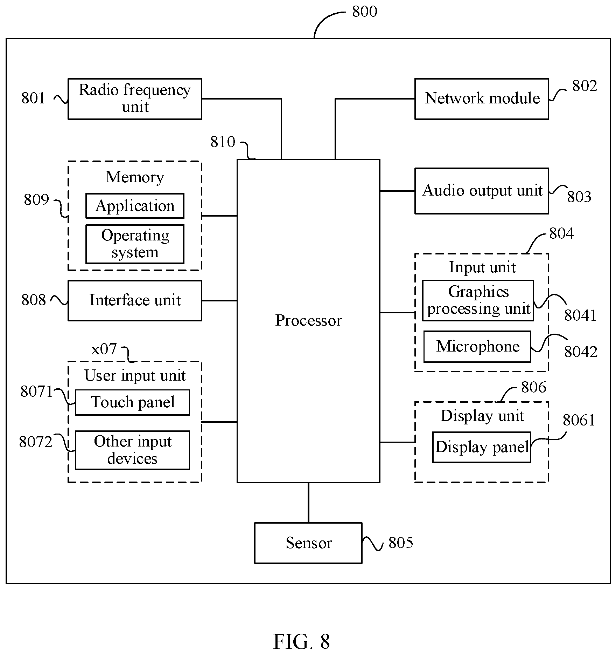

An embodiment of this application further provides a first network element, including a processor and a communication interface. The processor is configured to determine, based on filter information, one or more first devices as candidate member(s) able to participate in federated learning. The communication interface is configured to receive a request message sent by a second network element, and send a response message to the second network element, where the response message includes an identifier of the candidate member, the request message includes the filter information, and the filter information includes at least one of the following: a time window, an algorithm type, an accuracy threshold, a wireless access type, a signal quality requirement, a traffic range, member type information, quantity information, area information, and federated learning type information. The terminal embodiment corresponds to the foregoing terminal-side method embodiment, and all implementation processes and implementations of the foregoing method embodiment are applicable to the terminal embodiment, with the same technical effect achieved. Specifically, FIG. 8 is a schematic diagram of a hardware structure of a first network element for implementing embodiments of this application.

The first network element 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the first network element 800 may further include a power supply (for example, a battery) that supplies power to each component. The power supply may be logically connected to the processor 810 through a power management system, to implement functions such as charging management, discharging management, and power consumption management through the power management system. The structure of the first network element shown in FIG. 8 does not constitute a limitation on the first network element. The first network element may include more or fewer components than those shown in the figure, or some components may be combined, or there may be a different component layout. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick. Details are not described herein.

In this embodiment of this application, after receiving downlink data from a network-side device, the radio frequency unit 801 may transmit the downlink data to the processor 810 for processing. In addition, the radio frequency unit 801 may send uplink data to the network-side device. Usually, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may mainly include a first storage area for storing a program or instructions and a second storage area for storing data. The first storage area may store an operating system, an application or instructions required by at least one function (for example, an audio play function or an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory x09 in this embodiment of this application includes but is not limited to these and any other suitable types of memories.

The processor 810 may include one or more processing units. Optionally, the processor 810 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 810.

The radio frequency unit 801 is configured to: receive a request message sent by a second network element, where the request message includes filter information; and send a response message to the second network element, where the response message includes an identifier of a candidate member.

The processor 810 is configured to determine, based on the filter information, one or more first devices as candidate member(s) able to participate in federated learning, where the filter information includes at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

In the foregoing implementation solution, a first network element receives a request message sent by a second network element, determines, based on filter information included in the request message, one or more first devices as candidate member(s) able to participate in federated learning, and sends identification information of the candidate member to the second network element, where the filter information includes at least one of the following: a time window, an algorithm type, an accuracy threshold, a wireless access type, a signal quality requirement, a traffic range, member type information, quantity information, an area of interest AOI, and a federated learning type. The first network element can screen out, based on the filter information, a participating member suitable for federated learning, to improve training efficiency of federated learning.

Optionally, the first device includes at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information included in the filter information.

Optionally, the processor 810 is further configured to: determine a data type corresponding to the filter information;
obtain, based on the data type, attribute information corresponding to each of at least one second device from at least one third network element; and
determine the candidate member based on the attribute information and the filter information.

Optionally, the data type includes at least one of the following:
networking information and a corresponding time window, algorithm type, accuracy information, wireless access type, signal quality, and traffic.

Optionally, the processor 810 is further configured to: obtain first indication information from a third network element, where the first indication information is used to indicate willingness information of second devices to participate in the federated learning, and the willingness information indicates whether the devices are willing to participate in the federated learning; and
determine one or more first devices as the candidate member(s) based on the filter information and the first indication information, where the first device is a device among the second devices that is willing to participate in the federated learning and that meets the filter information.

Optionally, the processor 810 is configured to: obtain, from a third network element, willingness information of the first device to participate in the federated learning; and determine, based on the willingness information and the filter information, a first device that is willing to participate in the federated learning and that matches the filter information as a candidate member able to participate in the federated learning.

Optionally, the processor 810 is configured to: obtain federated learning capability information of the first device, where the capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and determine, based on the capability information and the filter information, a candidate member able to participate in the federated learning from the first device, where capability information of the candidate member matches the filter information.

That capability information of the candidate member matches the filter information includes at least one of the following:
a wireless access type used by the candidate member to participate in the federated learning is the same as the wireless access type included in the filter information;
an area in which the candidate member participates in the federated learning is located within the AOI included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information.

Optionally, the processor 810 is configured to obtain network state information corresponding to the first device, where the network state information includes at least one of the following:
type information of the first device;
location information of the first device;
wireless access type information of the first device; and
wireless signal quality information of the first device; and
determine, based on the filter information and the network state information corresponding to the first device, a candidate member able to participate in the federated learning from the first device, where network state information corresponding to the candidate member matches the filter information.

That network state information corresponding to the candidate member matches the filter information includes at least one of the following:
a wireless access type of the candidate member is the same as the wireless access type included in the filter information;
wireless signal quality information of the candidate member is higher than the signal quality requirement included in the filter information;
a location of the candidate member is within the AOI included in the filter information; and
a type of the candidate member is included in the member type information included in the filter information.

Optionally, the processor 810 is configured to: obtain capability information of the second devices to participate in the federated learning, where the capability information includes at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and determine one or more first devices as the candidate member(s) based on the filter information, the first indication information, and the capability information, where the first device is a device among the second devices that is willing to participate in the federated learning and whose federated learning capability information meets the filter information.

That capability information to participate in the federated learning meets the filter information includes:
a wireless standard used by the candidate member to participate in the federated learning is the same as the wireless access type included in the filter information;
time at which the candidate member participates in the federated learning is within the time window included in the filter information;
an algorithm type supported by the candidate member for participating in the federated learning is included in the algorithm type included in the filter information;
information about accuracy able to be achieved by the candidate member by participating in the federated learning is higher than the accuracy threshold included in the filter information; and
a type of the federated learning that the candidate member is to participate in is the same as the federated learning type included in the filter information.

Optionally, the request message further includes second indication information, and the second indication information is used to indicate a service type corresponding to the federated learning; and

The processor 810 is further configured to determine one or more first devices as the candidate member(s) based on the filter information and the second indication information, where
the first device is a device capable of supporting a service corresponding to the service type.

Optionally, the request message further includes sorting indication information, where the sorting indication information is used to indicate to sort the candidate members based on second information, and the second information includes at least one of the following: signal quality of the candidate member, accuracy information of the candidate member, and traffic information of the candidate member; and
an order of identifiers of candidate members in the response message is an order obtained through sorting based on the second information.

Optionally, the request message further includes grouping indication information, where the grouping indication information is used to indicate to group the candidate members based on third information, and the third information includes at least one of the following information:
an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

Optionally, the response message further includes at least one of the following information: an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

In the foregoing implementation solution, a first network element receives a request message sent by a second network element, determines, based on filter information included in the request message, one or more first devices as candidate member(s) able to participate in federated learning, and sends identification information of the candidate member to the second network element, where the filter information includes at least one of the following: a time window, an algorithm type, an accuracy threshold, a wireless access type, a signal quality requirement, a traffic range, member type information, quantity information, an area of interest AOI, and a federated learning type. The first network element can screen out, based on the filter information, a participating member suitable for federated learning, to improve training efficiency of federated learning.

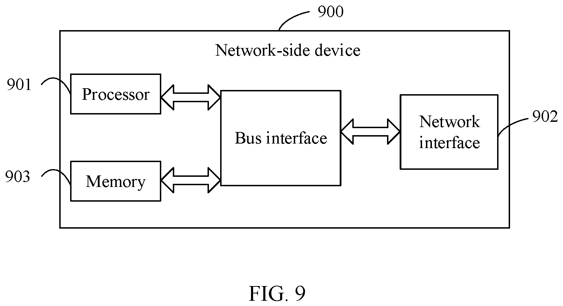

Specifically, an embodiment of this application further provides a second network element. As shown in FIG. 9, the second network element 900 includes a processor 901, a network interface 902, and a memory 903. The network interface 902 is, for example, a common public radio interface (common public radio interface, CPRI).

Specifically, the network-side device 900 in this embodiment of this application further includes instructions or a program stored in the memory 903 and capable of running on the processor 901, and the processor 901 invokes the instructions or program in the memory 903 to perform the method performed by the modules shown in FIG. 6, with the same technical effects achieved. To avoid repetition, details are not described herein again.

An embodiment of this application further provides a readable storage medium. The readable storage medium stores a program or instructions. When the program or instructions are executed by a processor, the processes in the embodiments of the method for determining a candidate member are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement the processes in the embodiments of the method for determining a candidate member, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiments of the method for determining a candidate member, with the same technical effects achieved. To avoid repetition, details are not described herein again.

An embodiment of this application further provides a system for determining a candidate member, including a first network element and a second network element, where the first network element may be configured to perform the steps of the method for determining a candidate member, and the second network element may be configured to perform the steps of the method for determining a candidate member.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the foregoing descriptions of the implementations, a person skilled in the art can clearly understand that the methods in the foregoing embodiments may be implemented by software in combination with a necessary common hardware platform, or certainly may be implemented by hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in embodiments of this application.

The foregoing describes embodiments of this application with reference to accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A method for determining a candidate member, comprising:
receiving, by a first network element, a request message sent by a second network element, wherein the request message comprises filter information;
determining, by the first network element based on the filter information, one or more first devices as candidate member(s) able to participate in federated learning; and
sending, by the first network element, a response message to the second network element, wherein the response message comprises an identifier of the candidate member, wherein
the filter information comprises at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

2. The method according to claim 1, wherein the request message further comprises:
indication information, wherein the indication information is used to indicate to perform a task of determining a candidate member to participate in federated learning, or is used to indicate that a current task is intended for federated learning or selecting a member for federated learning.

3. The method according to claim 1 or 2, wherein the first device comprises at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information comprised in the filter information.

4. The method according to claim 3, wherein the determining, by the first network element based on the filter information, one or more first devices as candidate member(s) able to participate in federated learning comprises:
obtaining, by the first network element, first indication information from a third network element, wherein the first indication information is used to indicate willingness information of second devices to participate in the federated learning, and the willingness information indicates whether the second devices are willing to participate in the federated learning; and
determining one or more first devices as the candidate member(s) based on the filter information and the first indication information, wherein the first device is a device among the second devices that is willing to participate in the federated learning and that meets the filter information.

5. The method according to any one of claims 1 to 3, wherein the determining, by the first network element based on the filter information, one or more first devices as candidate member(s) able to participate in federated learning comprises:
obtaining, by the first network element from a third network element, willingness information of the first device to participate in the federated learning; and
determining, by the first network element based on the willingness information and the filter information, a first device that is willing to participate in the federated learning and that matches the filter information as a candidate member able to participate in the federated learning.

6. The method according to any one of claims 1 to 5, wherein the determining, by the first network element based on the filter information, one or more first devices as candidate member(s) able to participate in federated learning comprises:
obtaining, by the first network element, federated learning capability information of the first device, wherein the capability information comprises at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and
determining, by the first network element based on the capability information and the filter information, a candidate member able to participate in the federated learning from the first device, wherein capability information of the candidate member matches the filter information.

7. The method according to claim 6, wherein that capability information of the candidate member matches the filter information comprises at least one of the following:
a wireless access type used by the candidate member to participate in the federated learning is the same as the wireless access type comprised in the filter information;
an area in which the candidate member participates in the federated learning is located within the AOI comprised in the filter information;
time at which the candidate member participates in the federated learning is within the time window comprised in the filter information;
an algorithm type supported by the candidate member for participating in the federated learning is comprised in the algorithm type comprised in the filter information;
information about accuracy able to be achieved by the candidate member by participating in the federated learning is higher than the accuracy threshold comprised in the filter information; and
a type of the federated learning that the candidate member is to participate in is the same as the federated learning type comprised in the filter information.

8. The method according to any one of claims 1 to 7, wherein the determining, by the first network element based on the filter information, one or more first devices as candidate member(s) able to participate in federated learning comprises:
obtaining, by the first network element, network state information corresponding to the first device, wherein the network state information comprises at least one of the following:
type information of the first device;
location information of the first device;
wireless access type information of the first device; and
wireless signal quality information of the first device; and
determining, by the first network element based on the filter information and the network state information corresponding to the first device, a candidate member able to participate in the federated learning from the first device, wherein network state information corresponding to the candidate member matches the filter information.

9. The method according to claim 8, wherein that network state information corresponding to the candidate member matches the filter information comprises at least one of the following:
a wireless access type of the candidate member is the same as the wireless access type comprised in the filter information;
wireless signal quality information of the candidate member is higher than the signal quality requirement comprised in the filter information;
a location of the candidate member is within the AOI comprised in the filter information; and
a type of the candidate member is comprised in the member type information comprised in the filter information.

10. The method according to claim 4, wherein the determining one or more first devices as the candidate member(s) based on the filter information and the first indication information comprises:
obtaining, by the first network element, capability information of the second devices to participate in the federated learning, wherein the capability information comprises at least one of the following information: a wireless access type for participating in the federated learning, an area for participating in the federated learning, time for participating in the federated learning, information about an algorithm supported for participating in the federated learning, information about accuracy able to be achieved by participating in the federated learning, and a type of the federated learning to be participated in; and
determining one or more first devices as the candidate member(s) based on the filter information, the first indication information, and the capability information, wherein the first device is a device among the second devices that is willing to participate in the federated learning and whose federated learning capability information meets the filter information.

11. The method according to any one of claims 1 to 10, wherein the request message further comprises second indication information, and the second indication information is used to indicate a service type corresponding to the federated learning; and
the determining, by the first network element based on the filter information, one or more first devices as candidate member(s) able to participate in federated learning comprises:
determining, by the first network element, one or more first devices as the candidate member(s) based on the filter information and the second indication information, wherein
the first device is a device capable of supporting a service corresponding to the service type.

12. The method according to any one of claims 1 to 10, wherein the request message further comprises sorting indication information, the sorting indication information is used to indicate to sort the candidate members based on second information, and the second information comprises at least one of the following: signal quality of the candidate member, accuracy information of the candidate member, and traffic information of the candidate member; and
an order of identifiers of candidate members in the response message is an order obtained through sorting based on the second information.

13. The method according to any one of claims 1 to 10, wherein the request message further comprises grouping indication information, the grouping indication information is used to indicate to group the candidate members based on third information, and the third information comprises at least one of the following information:
an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

14. The method according to any one of claims 1 to 10, wherein the response message further comprises at least one of the following information: an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

15. A method for determining a candidate member, comprising:
sending, by a second network element, a request message to a first network element, wherein the request message comprises filter information, and the request message is used to indicate the first network element to determine, based on the filter information, one or more first devices as candidate member(s) able to participate in federated learning; and
receiving, by the second network element, a response message sent by the first network element, wherein the response message comprises an identifier of the candidate member, wherein
the filter information comprises at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

16. The method according to claim 15, wherein the request message further comprises:
indication information, wherein the indication information is used to indicate to perform a task of determining a candidate member to participate in federated learning, or is used to indicate that a current task is intended for federated learning or selecting a member for federated learning.

17. The method according to claim 15 or 16, wherein the first device comprises at least one of the following:
a first device in a network-connected state within the time window;
a first device supporting federated learning within the time window;
a first device supporting the algorithm type;
a first device supporting federated learning using the algorithm type;
a first device with model training accuracy information higher than the accuracy threshold;
a first device in the wireless access type;
a first device supporting federated learning in the wireless access type;
a first device with signal quality higher than the signal quality requirement;
a first device whose consumed traffic is within the traffic range;
a first device meeting the requirement for a type of a candidate member;
a first device located within the AOI; and
a first device whose federated learning type is the same as the federated learning type information comprised in the filter information.

18. The method according to any one of claims 15 to 17, wherein the request message further comprises sorting indication information, the sorting indication information is used to indicate to sort the candidate members based on second information, and the second information comprises at least one of the following: signal quality of the candidate member, accuracy information of the candidate member, and traffic information of the candidate member; and
identifiers of candidate members in the response message are identifiers obtained through sorting based on the second information.

19. The method according to any one of claims 15 to 17, wherein the request message further comprises grouping indication information, the grouping indication information is used to indicate to group the candidate members based on third information, and the third information comprises at least one of the following information: an area in which the candidate member is located, a time window within which the candidate member is in a network-connected state, an algorithm type supported by the candidate member, accuracy information of the candidate member, a wireless access type of the candidate member, and signal quality of the candidate member; and
identifiers of candidate members in the response message are identifiers obtained through grouping based on the third information.

20. The method according to any one of claims 15 to 17, wherein the response message further comprises an area in which the candidate member is located, a time window within which the candidate member is in a network-connected state, an algorithm type supported by the candidate member, accuracy information of the candidate member, a wireless access type of the candidate member, signal quality of the candidate member, traffic information of the candidate member, and a time window within which the candidate member is able to perform federated learning.

21. The method according to claim 17 or 18, wherein the method further comprises:
determining, by the second network element based on the identifier of the candidate member, a target member to participate in the federated learning.

22. An apparatus for determining a candidate member, comprising:
a receiving module, configured to receive a request message sent by a second network element, wherein the request message comprises filter information;
a processing module, configured to determine, based on the filter information, one or more first devices as candidate member(s) able to participate in federated learning; and
a sending module, configured to send a response message to the second network element, wherein the response message comprises an identifier of the candidate member, wherein
the filter information comprises at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

23. An apparatus for determining a candidate member, comprising:
a sending module, configured to send a request message to a first network element, wherein the request message comprises filter information, and the request message is used to indicate the first network element to determine, based on the filter information, one or more first devices as candidate member(s) able to participate in federated learning; and
a receiving module, configured to receive a response message sent by the first network element, wherein the response message comprises an identifier of the candidate member, wherein
the filter information comprises at least one of the following:
a time window for indicating a time window available for the federated learning;
an algorithm type for indicating a model training algorithm type that needs to be supported for the federated learning;
an accuracy threshold for indicating a model training accuracy requirement that needs to be met for the federated learning;
a wireless access type for indicating a wireless access type that needs to be selected for the federated learning;
a signal quality requirement for indicating a requirement for wireless signal quality during the federated learning;
a traffic range for indicating a requirement for a traffic usage range of the candidate member;
member type information for indicating a requirement for a type of the candidate member participating in the federated learning;
quantity information for indicating a requirement for the number of candidate members;
an area of interest AOI for indicating an area in which the candidate member is located; and
federated learning type information for indicating whether the federated learning is vertical federated learning or horizontal federated learning.

24. A first network element, comprising a processor and a memory, wherein the memory stores a program or instructions capable of running on the processor, and when the program or instructions are executed by the processor, the steps of the method for determining a candidate member according to any one of claims 1 to 14 are implemented.

25. A second network element, comprising a processor and a memory, wherein the memory stores a program or instructions capable of running on the processor, and when the program or instructions are executed by the processor, the steps of the method for determining a candidate member according to any one of claims 15 to 21 are implemented.

26. A readable storage medium, wherein the readable storage medium stores a program or instructions, and when the program or instructions are executed by a processor, the method for determining a candidate member according to any one of claims 1 to 14 is implemented, or the steps of the method for determining a candidate member according to any one of claims 15 to 21 are implemented.
